(19) **Europäisches Patentamt**

**European Patent Office**

**Office européen des brevets**

(11) **EP 1 362 881 B1**

(12) **EUROPÄISCHE PATENTSCHRIFT**

(45) Veröffentlichungstag und Bekanntmachung des Hinweises auf die Patenterteilung:
**07.06.2006 Patentblatt 2006/23**

(51) Int Cl.:
*C08J 5/18* (2006.01)    *C09J 7/02* (2006.01)
*C08L 27/06* (2006.01)

(21) Anmeldenummer: **03004103.2**

(22) Anmeldetag: **26.02.2003**

(54) **Folie und damit gebildetes Klebeband**

Film and adhesive tape formed therewith

Film et ruban adhésif formé avec celui-ci

(84) Benannte Vertragsstaaten:
**DE ES FR GB IT**

(30) Priorität: **26.04.2002  DE 10218686**

(43) Veröffentlichungstag der Anmeldung:
**19.11.2003  Patentblatt 2003/47**

(73) Patentinhaber: **tesa AG**
**20253 Hamburg (DE)**

(72) Erfinder:
• **Müssig, Bernhard, Dr.**
**22850 Hamburg (DE)**

• **Neubert, Ingo, Dr.**
**22850 Norderstedt (DE)**

(56) Entgegenhaltungen:
WO-A-02/051628          GB-A- 1 406 841
US-A- 5 846 651

• **PATENT ABSTRACTS OF JAPAN vol. 018, no. 337 (C-1217), 27. Juni 1994 (1994-06-27) & JP 06 080812 A (SUNSTAR ENG INC), 22. März 1994 (1994-03-22)**

## Beschreibung

Die Erfindung betrifft eine Folie aus wenigstens einem PVC-Polymer und wenigstens einem Weichmacher. Die Erfindung betrifft ferner ein Klebeband, das mit einer derartigen Folie gebildet ist.

Folien der eingangs erwähnten Art werden insbesondere als Trägermaterial mit einem auf die Folie aufgebrachten Klebstoff als Klebebänder, vorzugsweise selbstklebende Abdeckbänder, verwendet. Selbstklebende Abdeckbänder einschließlich daraus geformter Schablonen, im folgenden als Abdeckklebeband bezeichnet, müssen einige wesentliche Eigenschaften aufweisen, damit sie die besonderen an sie gestellten Anforderungen erfüllen. Leichte Dehnbarkeit beim Kurvenverkleben bei gleichzeitig hohem E-Modul (Dehnelastizitätsmodul) im Bereich der Kräfte während des Abrollens oder der Applikation auf gerade Strecken, keinerlei beziehungsweise minimale Schrumpfneigung im verklebten Zustand sowie eine geringe Dicke sind wichtige Hauptanforderungen, um eine scharfe und gleichmäßige Lackkante auf gewölbten Oberflächen erzeugen zu können sowie eine saubere Verklebung in Kurven zu ermöglichen. Um eine schnelle und leichte Verarbeitbarkeit des Abdeckklebebandes zu erreichen, ist vom Verarbeiter eine leichte Handeinreißbarkeit bei der Applikation gewünscht, das heißt, dass ein Abreißen des Abdeckklebebandes ohne technische Hilfsmittel wie Scheren oder Messer sowie ohne großen Kraftaufwand möglich ist.

Der Begriff Handeinreißbarkeit beinhaltet sowohl ein Einreißen von der Seite mit zwei Händen zwischen Daumen und Zeigefinger als auch ruckartiges Abreißen in Längsrichtung. Wie dem Fachmann geläufig ist, sind bei Folien bzw. daraus hergestellten Klebebändern die gleichzeitige Anforderung an leichte Dehnbarkeit und leichter Handeinreißbarkeit unvereinbar. Vereinfacht ausgedrückt sind Folien üblicherweise entweder weich und dehnbar oder spröde und handeinreißbar.

Bisher werden für diese Anwendung üblicherweise Abdeckklebebänder bestehend aus einem Trägermaterial aus Papier, Polyester, Hart- oder Weich-PVC (Polyvinylchlorid), Polyethylen oder Polypropylen verwendet.

Bei einer Verwendung von Papier oder orientierten Trägerfolien aus Polyester, Hart-PVC, Polyethylen oder Polypropylen ist die Dehnbarkeit hinsichtlich einer Reißdehnung zu gering oder die aufzuwendende Kraft zu hoch, um den Ansprüchen bei hoher Verformung insbesondere bei Anwendungen auf gewölbten Untergründen wie z.B. bei Kfz-Stoßstangen zu genügen. Nicht gereckte Folien aus weichen Polyolefinen wie Polyethylen oder Propylencopolymeren oder Weich-PVC sind nicht handeinreißbar. Polyolefinfolien weisen nach Dehnung durch Kurvenverklebung auch eine Rückschrumpfung auf.

Die Verwendung von Polyolefinmischungen, für elastische Folien und Abdeckklebebänder, ist aus der WO 00/05305 bekannt. Hierbei wird ein relativ flexibles Polymer mit einem relativ unflexiblen Polymer zu einer Mischung verarbeitet.

Klebebänder auf Basis einer Weich-PVC-Folie werden zum Beispiel im Patent GB 2171712 beschrieben. Konventionelle Weich-PVC-Klebebänder enthalten einen Anteil von größer 37 Gewichtsteilen eines Monomerweichmachers auf Phthalatbasis auf 100 Gewichtsteile des regelmäßig unvernetzten PVC-Polymers. Diese Weich-PVC-Klebebänder haben üblicherweise eine zu hohe Reißkraft und Reißdehnung, so dass ein Abreißen des Abdeckklebebandes ohne technische Hilfsmittel wie Scheren oder Messer nur schwer möglich ist. Eine leichte Handeinreißbarkeit bei der Applikation ist aber vom Verarbeiter gewünscht.

Bekannt sind ebenfalls Abdeckklebebänder, die aus einem bahnförmigen PVC-Trägermaterial bestehen, das aus einem PVC-Polymeren mit einem K-Wert größer 63, üblicherweise 65 bis 80, sowie einem Gemisch aus Monomer- und Polymerweichmacher mit einer Gesamtmenge von größer als 37 Gewichtsteilen auf 100 Gewichtsteile PVC-Polymer bestehen. Diese Abdeckklebebänder lassen sich ebenfalls nur mit hohem Kraftaufwand abreißen. Dieses Verhalten spiegelt sich in einer Schlagzugzähigkeit größer 1100 kJ/m$^2$ und Reißdehnungen über 250 % wieder. Diese Angaben beziehen sich auf die Längsrichtung und nicht auf Rollen, die üblicherweise eine raue Schnittkante aufweisen und dadurch auch geringere Werte ergeben können, sondern auf Muster, die entsprechend den Prüfmethoden mit scharfen Klingen zugeschnitten sind.

Durch den Zusatz von anorganischen Füllstoffen lässt sich die Handeinreißbarkeit nur wenig verbessern. Selbst bei 50 Gewichtsteilen Kreide auf 100 Gewichtsteile PVC-Polymer ist die Verbesserung marginal, die Verarbeitbarkeit der Mischung wird jedoch schon erheblich schwieriger und die Flexibilität der Folie wird drastisch verschlechtert.

Zur Verbesserung der Handeinreißbarkeit werden bei Herstellung der Klebebandrollen raue Schnittkanten erzeugt, die bei mikroskopischer Betrachtung Risse ausbilden, die ein Weiterreißen begünstigen. Dies ist möglich durch die Anwendung von Quetschschnitt mit stumpfen oder definiert gezackten rotierenden Messern oder durch Abstechschnitt mit stumpfen feststehenden Klingen. Nachteilig bei diesem Verfahren sind die daraus resultierenden unsauberen (rauen) Lackkanten, die nicht zufriedenstellende Reproduzierbarkeit der Ergebnisse bei industriellen Fertigungsmengen, ein nur begrenztes Ergebnis hinsichtlich der Handeinreißbarkeit sowie Abrisse beim Abziehen des Abdeckklebebandes nach der Anwendung.

Bei geringen Geschwindigkeiten beziehungsweise kleinen Frequenzen (entspricht dem Abrollen und dem Applizieren auf den zu lackierenden Gegenstand) muss sich das Abdeckklebeband weich und geschmeidig und bei hohen Geschwindigkeiten beziehungsweise großen Frequenzen (entspricht dem Abreißen von Hand) hart und spröde verhalten.

Es besteht daher ein Bedürfnis, eine Folie, die als Trägermaterial für Klebebänder verwendbar ist und eine gute Dehnbarkeit aufweist, bereitzustellen, die leicht mit der Hand einreißbar ist. Derartige Folien sind auch außerhalb der Verwendung als Abdeckbänder wünschenswert, da in vielen Anwendungsfällen gut dehnbare Folien benötigt werden, die leicht von einer Rolle o. dgl. abtrennbar sein sollen.

Aufgabe der Erfindung ist es daher, eine Folie der eingangs erwähnten Art mit leichter Handeinreißbarkeit und guter Dehnbarkeit bereitzustellen. Aufgabe der Erfindung ist insbesondere, ein mit einer derartigen Folie gebildetes Klebeband bereitzustellen, das zur Erzeugung scharfer Lackkanten geeignet ist.

Diese Aufgabe wird gelöst durch eine Folie der eingangs erwähnten Art, die 2 bis 25 Gewichtsteile eines additiven Polymers, in Form eines in sich vernetzten oder eines mit PVC unverträglichen Polymers, auf 100 Gewichtsteile des PVC-Polymers und 25 bis 37 Gewichtsteile eines Polymerweichmachers auf 100 Gewichtsteile des PVC-Polymers enthält. Für den Fall, dass das vernetzte Polymer aus PVC besteht, beziehen sich die oben genannten Gewichtsteile auf 100 Gewichtsteile des unvernetzten PVC-Polymers. Die Zugkraft längs bei 1 % Dehnung ist auf einen Wert von mindestens 3,0 N/cm eingestellt.

Durch eine solche Mischung wird eine Folie erhalten, die eine gute Dehnbarkeit besitzt. Die Dehnbarkeit wird in Betrag und Charakter vorzugsweise so eingestellt, dass neben einer leichten Verformbarkeit und Kurvenklebbarkeit auch noch eine geringe Dehnung bei der Applikation, beispielsweise eines Abdeckklebebands erzielt wird.

Eine gute Handeinreißbarkeit wird grundsätzlich erzielt, wenn die Folie möglichst spröde ist, darunter leidet jedoch die Dehnbarkeit des Materials. Zur Erhöhung der Dehnbarkeit wird dem Trägermaterial ein Weichmacher beigemischt, wodurch wiederum die Handelnreißbarkeit negativ beeinflußt wird.

Die Zugabe eines additiven Polymers bietet einen überraschenden Ausweg aus diesem Dilemma, indem das additive Polymer die Handeinreißbarkeit erhöht, ohne sich negativ auf die Dehnbarkeit der Folie auszuwirken.

Die charakteristische Eigenschaft der Folie im Sinne der vorliegenden Erfindung ist die leichte Handeinreißbarkeit, die dem Verarbeiter ein Abreißen ohne hohen Kraftaufwand beziehungsweise ohne Zuhilfenahme von Hilfsmittel wie Schere oder Messer bei der Applikation ermöglicht. Dadurch ergibt sich eine erhebliche Zeitersparnis im Verarbeitungsprozess.

Die Erfindung bezieht sich daher auch auf ein Klebeband, das mit einer erfindungsgemäßen Folie als Trägermaterial und mit einem auf die Folie aufgebrachten Klebstoff gebildet ist wobei für ein selbstklebendes Abdeckband der Klebstoff einseitig aufgebracht ist

Als Maß für die Verarbeitbarkeit kann die Reißdehnung, Höchstzugkraft sowie Schlagzugzähigkeit dienen. Reißdehnung und Höchstzugkraft werden als Endpunkt des Kraft-Dehnungs-Diagramms bei der Zugprüfung eines Prüfstreifens ermittelt und in % bezogen auf die Ursprungslänge beziehungsweise in N/cm bezogen auf die Ursprungsbreite angegeben (DIN EN ISO 527-3).

Damit eine leichte Handeinreißbarkeit des erfindungsgemäßen Folie gewährleistet ist, sollte die Reißdehnung im Bereich von 150 - 300 % vorzugsweise 180 bis 250 % und die Reißkraft längs im Bereich von 12 bis 30 N/cm liegen. Die Eigenschaft der Handeinreißbarkeit spiegelt sich besonders in der Schlagzugzähigkeit (DIN 53453, ISO/R 179) wider, demnach sollten die Folien ein Wert kleiner 1000 kJ/m$^2$, insbesondere kleiner 700 kJ/m$^2$, längs zur Maschinenrichtung haben.

Bei Dehnung der Folie sollte eine Kraft von 30 N/cm nicht überschritten werden, um eine faltenfreie Kurvenverklebung der Abdeckklebebänder und eine plane Verklebung auf sphärischen Untergründen zu ermöglichen und Ablösungserscheinungen durch Schrumpfkräfte zu vermeiden. Eine Reißdehnung im Bereich von 12 - 30 N/cm hat sich als günstig herausgestellt Ein seitliches Einschnüren (Necking) der Folie oder damit gebildeten Klebebandes wird im Gegensatz zu Polyolefindebebändern nicht beobachtet. Für die Kraft längs bei 1% Dehnung (F1%-Wert) ist ein Mindestwert von insbesondere größer 5,5 N/cm, anzustreben, um beim Abrollen und Verkleben und im Speziellen bei der automatisierten Applikation eine Verdehnung des Abdeckbandes zu verhindern.

Die Trocknung bzw. Aushärtung von frisch lackierten Oberflächen erfordert eine thermische Behandlung von bis zu 45 Minuten, die je nach verwendeten Lacktyp bei Temperaturen von 110 bis 160°C liegt. Auch nach einer thermischen Belastung von 160° C ist das Abdeccklebeband in speziellen Ausruhrungsformen ruckstandsfrel von der Lackoberfläche ablösbar.

Das Abdeckklebeband kann ebenfalls für spezielle Anwendungen, bei den eine erhöhte Reißfestigkeit benötigt wird, wie zum Beispiel zum Maskieren von Fensterflanschen während des Lackierprozesses, vor der Applikation mit einem weiteren Klebeband zum Beispiel aus einem Polyesterträgermaterial zusammenlaminiert werden.

Das vorzugsweise unvemetzte PVC-Polymer besteht bevorzugt aus Emulsions-, Masse- oder Suspensions-PVC. Die Handeinreißbarkeit wird begünstigt, wenn das PVC-Polymer maximal einen K-Wert von 63 hat. Der K-Wert (DIN 53726, ISO 174) beschreibt die Viskosität einer Polymerlösung. Der durchschnittliche K-Wert wird durch Mischung aus einem Standard-PVC (K-Wert z.B. 65 oder 70) und einem Spezialtyp (50 oder 58) hergestellt.

In einer bevorzugten Ausführungsform der Erfindung enthält die Folie 2 bis 10 Gewichtsteile des additiven Polymers auf 100 Gewichtsteile PVC-Polymer. Auch hier bezieht sich die oben genannten Gewichtsteile auf 100 Gewichtsteile des unvernetzten PVC-Polymers, wenn das vernetze Polymer aus PVC besteht.

Bevorzugt ist das vernetzte Polymer ein PVC, ein Polyacrylat, ein Benzoguanamin/Melamin-Formaldehyd-Harz, ein Polystyrol oder ein Silikon. Beispiele für vernetzte Polymere sind PVC (Vinnolit® K 221, Vinnolit Kunststoff GmbH), Polyacrylat (Soken MX-180 TA, Soken Japan), Benzoguanamin/Melamin-Formaldehyd-Harz (Epostar, Nippon Electric). Derartige Materialien sind zum Beispiel als Mattierungmittel oder Antiblockiermittel in Folien bekannt und werden zum Beispiel in Emulsions- oder Suspensionsreaktion oder zum Vermahlen von vernetzten Polymeren hergestellt.

Das mit PVC unverträgliche Polymer ist vorzugsweise ein Homo- oder Copolymere eines Ethylens (z.B. Coathylene LD 2477, Herberts Polymer Powders AG), eines Propylens (z.B. Coathylene PB 0580, Herberts Polymer Powders AG), eines Styrols (Styroflex BX 6105, BASF AG) oder eines Amids 12 (SP 10, Kogo Products). Die PVC-unverträglichen Polymere werden geeigneter Weise pulverförmig eingesetzt. Unter einem mit PVC unverträglichen Polymer wird verstanden, dass das Polymer im Trägermaterial eine zweite Polymerphase bildet. Diese zweite Phase ist zum Beispiel durch elektronenmikroskopische Aufnahmen, DSC (Differential Scanning Callometrie/ Differenzialthermoanalyse) oder dynamisch mechanischen Messung erkennbar. Eine äußerlich sichtbare scheinbar homogene Mischbarkeit soll nicht als Maß für die Verträglichkeit herangezogen werden. Eine Unverträglichkeit bzw. Nichtmischbarkeit von Polymeren äußert sich ebenfalls in der Differenz der Löslichkeitsparameter (Hildebrand Parameter). Löslichkeitsparameter sowie deren Beschreibung befinden sich unter anderem im "Polymer Handbook", 4. Auflage, Wiley & Son.

Vernetzte und PVC unverträgliche Polymere verbessern die Einreißbarkeit der Folie. Vermutlich geschieht dies durch die Ausbildung von Mikrostrukturen oder Homogenitäten im PVC, so dass die Sprödigkeit der Folie bei höheren Frequenzen (Geschwindigkeiten) erhöht wird.

Um Rückstände auf den frisch lackierten Oberflächen nach einem Demaskieren des Abdeckklebebandes sowie eine Migration des Weichmachers in den Klebstoff zu unterbinden, werden Polymerweichmacher eingesetzt. Die Polymerweichmacher bestehen vorzugsweise aus Polyestern auf Basis von Adipin-, Sebacin, Azelain-, Phthalsäure und/oder auf Basis von Polyadipatestern. Eine Beschreibung von Weichmachern ist zum Beispiel im "Kunststoff-Handbuch-Polyvinylchlorid 2/1", 2. Auflage, Hanser Verlag, Kapitel 6.7 zu finden. Besonders Weichmacher auf Basis von Polyadipatestern, zum Beispiel Palamoll® 652 (BASF) oder Uraplast RA 19 (DSM), haben sich als geeignet erwiesen.

Zur Optimierung der Eigenschaften, insbesondere des Kraft-Dehnungs-Verhaltens der Folie, werden bevorzugt 25 bis 37 Gewichtsteile und besonders bevorzugt 30 bis 33 Gewichtsteile eines oder mehrerer Polymerweichmacher auf 100 Gewichtsteile PVC-Polymer verwendet. Bei der zusätzlichen Verwendung eines Monomerweichmachers, wie vorzugsweise ein Phthalsäure- oder Trimillitsäureester, besteht aufgrund ihrer leichter Migration eine Tendenz zur Belags- und Rückstandsbildung, der Anteil sollte daher bevorzugt kleiner 4 Gewichtsteile und besonders bevorzugt kleiner 1 Gewichtsteil auf 100 Gewichtsteile PVC-Polymer sein. Bei unter 25 Gewichtsteilen Polymerweichmacher sind die Folien wenig dehnbar und spröde und oberhalb von 37 Gewichtsteilen Polymerweichmacher schwerer handeinreißbar und im F1%-Wert zu niedrig.

In einer bevorzugten Ausführungsform der Erfindung enthält die Folie wenigstens ein Additiv. Das Additiv kann beispielsweise ein Stabilisator, ein Füllstoff, ein PVC-verträgliches Polymer, ein Pigment, ein Impactmodifier, ein Gleitmittel und/oder ein Verarbeitungshilfsmittel sein.

Der Zusatz von Stabilisatoren ist zweckmäßig, um eine thermische Schädigung der PVC-Folien bei der Verarbeitung und Anwendung zu vermeiden. Die Funktion der Stabilisatoren besteht vorrangig in der Vermeidung von Versprödung und Verfärbung der PVC-Trägerfolie während des Herstellungs- und Verarbeitungsprozesses und der späteren Verwendung. Derartige Stabilisatoren sind z.B. im "Plastics Additives Handbook", 3. Auflage, Hanser Verlag, Kap. 3 und im "Kunststoff-Handbuch - Polyvinylchlorid 2/1". 2. Auflage, Hanser Verlag, Kap. 6.3 beschrieben. Die Stabilisatoren basieren vorzugsweise auf Barium/Zink-, Calcium/Zink- oder Zinn-Verbindungen. Die Verwendung von Blei- oder Cadmium-haltigen Stabilisatoren ist ebenfalls möglich, werden aber aus toxikologischen und Umweltaspekten vermieden. Der Gehalt an Stabilisator beträgt bevorzugt 2 bis 5 Gewichtsteile bezogen auf 100 Gewichtsteile des Trägermaterials. Die Verwendung von zusätzlich 1 bis 4 Gewichtsteilen epoxidierten Naturölen wie epoxidiertes Sojabohnenöl als Costabilisatoren ist möglich, aber wegen der Migrationsneigung analog den Monomerweichmachern eher nachteilig.

Weitere bei PVC-Folien übliche Additive wie Füllstoffe, PVC-verträgliche Polymere, Pigmente, Impactmodifier (schlagzähmachende Hilfsstoffe) oder Gleitmittel und/oder Verarbeitungshilfsmittel (z.B. Paraloid® K 120 ND, Rohm & Haas) können zur Herstellung der Folie verwendet werden. Bevorzugte Füllstoffe sind ein Calciumcarbonat (Kreide, Marmor), ein Kaolin und/oder eine Kieselsäure. Ihre Funktion ist die Einstellung von Verarbeitungseigenschaften, mechanischen Daten der Folie oder Kosten und nicht oder nur von untergeordneter Bedeutung zur Einstellung der Handeinreißbarkeit. Zur Optimierung der Eigenschaften der Folie können zusätzlich PVC-verträgliche Polymere wie vorzugsweise chloriertes PVC, Nitril-Butadien-Kautschuk (NBR mit hohen AN-Gehalt), Polyurethan (z.B. Baymod® PU, Bayer) und Ethylen-Vinylacetat-Copolymere (EVM mit hohem VA-Gehalt, ggf. als Terpolymer mit Kohlenmonoxid) verwendet werden. Übliche Additive werden im "Kunststoff-Handbuch - Polyvinylchlorid 2/1", 2. Auflage, Hanser Verlag, Kap. 6 beschrieben.

Die Herstellung einer Trägerfolie des Abdeckklebebandes erfolgt auf einem Kalander. Eine Prägung der Trägerfolie ist nur zur Einstellung der Abrollkraft möglich.

Die Trägerfolie ist mit einer Selbstklebemasse als Klebstoff beschichtet, dadurch wird ein selbstklebendes Klebeband erhalten. Der Klebstoff enthält bevorzugt eine Polyisopren-, Polyisobutylen- oder Polyacrylatklebemasse.

Der Klebstoff ist vorzugsweise vernetzt. Eine Vernetzung dient der Verbesserung der Wiederabziehbarkeit des Abdeckklebebandes nach der Anwendung und kann thermisch oder durch Bestrahlen mit UV-Licht oder Elektronenstrahlen erfolgen. Um eine ausreichende Haftung aber auch eine leichte Abrollbarkeit sowie eine Wiederablösbarkeit nach der Anwendung zu gewährleisten, sollte die Klebekraft auf Stahl im Bereich von 2,0 und 4,8 N/cm liegen.

Es ist auch möglich, rückseitig ein Trennlack zur Verbesserung der Abrollbarkeit aufzubringen. Bevorzugt befindet sich zwischen dem Trägermaterial und der Klebemischung eine Primerschicht, diese verbessert die Haftung der Klebemischung auf dem Trägermaterial. Dadurch wird bei einer Anwendung bis 160 °C ein rückstandsfreies Wiederabziehen, nach der Anwendung erreicht. Beschreibungen der üblicherweise für Klebebänder, insbesondere Abdeckklebebänder verwendeten Klebemassen sowie Trennlacke und Primem finden sich zum Beispiel im "Handbook of Pressure Sensitive Adhesive Technology", D. Satas, 3. Auflage.

Prüfmethoden

Das Zugdehnungsverhalten der Folie wird an Prüflingen vom Typ 2 (15 cm breiten und 150 cm langen Prüfstreifen, Einspannlänge 100 mm) nach DIN EN ISO 527-3/2/300 mit einer Prüfgeschwindigkeit von 300 mm/min ermittelt. Die Messungen werden bei einem Prüfklima von 23 ± 1 ° C und 50 ± 5 % rel. Luftfeuchte durchgeführt.

Die Zugkraft bei 1 % Dehnung (F1%-Wert) wird an einem 15 mm breiten und 150 mm langen Prüfstreifen (Einspannlänge 100 mm) entsprechend DIN EN ISO 527-3/2/10 mit einer Prüfgeschwindigkeit von 10 mm/min bei einem Prüfklima von 23 ± 1 ° C und 50 ± 5 % rel. Luftfeuchte ermittelt.

Zum Bestimmung der Temperaturbeständigkeit sowie Rückständen nach der Applikation werden 15 mm breite Abdeckklebebänder auf einem mit Kunstharz-Prüflack (Schwarzlack, BASF) lackierten Blech verklebt und anschließend bei 150 bzw. 160° C für eine Stunde gelagert. Nach anschließender Temperierung auf 25 bzw. 60° C wird das Abdeckklebeband bei diesen Temperaturen in einem Winkel von 180° von der Lackoberfläche abgezogen. Anschließend erfolgt die visuelle Beurteilung der Rückstände auf der Lackoberfläche nach folgenden Kriterien: (++) keinerlei Rückstände und Ghosting; (+) leichtes Ghosting; (-) Ghosting oder Rückstände; (--) starke Masserückstande oder Umspulen der Masse.

Die Lackhaftung sowie die Qualität der Lackkante werden geprüft, indem ein Metallblech, das stellenweise mit dem Abdeckklebeband maskiert ist, lackiert wird. Der Lack darf im Lackierprozess nicht von der Abdeckklebeband-Oberfläche abperlen. Nach Trocknung der Lackschicht und anschließendem Abziehen des Abdeckklebebandes darf das Abdeckklebeband nicht reißen sowie die auf ihm haftende Lackschicht auch beim Biegen und Knicken nicht abplatzen. Anschließend erfolgt die Beurteilung der Qualität der Lackkante.

Zur Untersuchung des Schrumpfverhaltens der Abdeckbänder werden Prüfstreifen von 20 cm Länge auf einen Prüfgrund (lackiertes Blech) verklebt, an den Enden mit einem Klebeband fixiert, in der Streifenmitte durchgeschnitten und 30 min. bei 130° C gelagert. Der dabei auftretende Spalt wird ermittelt und in % der Ausgangslänge als Maß des Schrumpfens angegeben.

Die Schlagzugzähigkeit der Folie wird entsprechend DIN EN ISO 8256 bei einem Prüfklima von 23 ± 1° C und 50 ± 5 % rel. Luftfeuchte an Proben der Abmaße 15 mm Breite und 27 mm Länge bestimmt. Bei der Schlagzugzähigkeit längs werden die Prüflinge parallel zur Maschinenrichtung geschnitten und der Rissverlauf erfolgt demzufolge quer zur Maschinenrichtung. Es wird jeweils das arithmetische Mittel aus 10 Messungen angegeben. Die Schlagzugzähigkeit berechnet sich gemäß DIN EN ISO 8256 nach:

$$E = E_c / (x * d) * 1000$$

E Schlagzugzähigkeit
$E_c$ Schlagarbeit
x Probenbreite
d Probendicke.

Die Klebkräfte werden bei einem Abzugswinkel von 180° nach AFERA 4001 an 15 mm breiten Teststreifen bei einem Prüfklima von 23 ± 1 °C und 50 ± 5 % rel. Luftfeuchte bestimmt. Hierbei werden Stahlplatten als Prüfuntergrund verwendet.

Im folgenden wird die Erfindung anhand von Beispielen näher erklärt.

Beispiel 1:

Zur Herstellung des Trägermaterials wird zunächst in einem schnelldrehenden Mischer ein Dryblend aus 100 Gewichtsteilen Solvin® 258 RF (Solvin), 30 Gewichtsteilen Palatinol® 652 (BASF), 1,5 Gewichtsteilen Palafinol® N (BASF), 20 Gewichtsteilen Omya EHX1 (Omya), 5 Gewichtsteilen Styroflex® 6105 (BASF), 4 Gewichtsteilen Baerostab® UBZ 639 (Baerlocher), 2 Gewichtsteilen Baerostab® LSA (Baerlocher) und 1,5 Gewichtsteilen Paroloid K 120 (Rohm und Haas) hergestellt. Der Dryblend wird anschließend in einem Extruder plastifiziert und in mit Hilfe eines Kalanders zu einem Film mit einer Breite von 2500 mm und einer Dicke von 0,08 mm ausgeformt. Die Trägermasse wird mit einer Haftvermittlerschicht bestehend aus einer Lösung aus 1 Gewichtsteil Naturkautschuk und 1 Gewichtsteil Nitrilkautschuk in Toluol mit einem Auftragsgewicht von 0,6 g/m$^2$ beschichtet und getrocknet. Die Klebstoffbeschichtung wird direkt auf die Haftvermittlerschicht mittels Kommarakel mit einem Auftragsgewicht von 25 g/m$^2$ aufgetragen. Der Klebstoff besteht aus einer Lösung einer Naturkautschukklebemasse in Benzin mit einem Feststoffgehalt von 30 Gewichtsprozent. Diese besteht aus 50 Gewichtsteilen Naturkautschuk, 10 Gewichtsteilen Zinkoxid, 3 Teilen Kolophoniumharz, 6 Gewichtsteilen Alkylphenolharz, 17 Gewichtsteilen Terpenphenolharz, 12 Gewichtsteilen Poly-β-Pinenharz und 2 Gewichtsteile mineralisches Öl. Die Trocknung des Nachstriches erfolgt im Trokkenkanal bei 70° C.

Das selbstklebende Abdeckklebeband lässt sich ohne sichtbare Dehnung abwickeln und beim Gebrauch zum Maskieren von Automobilteilen auch schwieriger Geometrie applizieren. Eine gleichmäßige Verklebung um enge Kurven ist faltenfrei und ohne abheben der Randbereiche möglich. Das Abreißen von Hand erfordert einen gewissen Kraftaufwand, was sich in einem erhöhten Wert für die Schlagzugzähigkeit wiederspiegelt. Nach dem Gebrauch (Lackierprozess) lässt sich das Abdeckklebeband problemlos und ohne Abrisse vom Verklebungsuntergrund abziehen und ergibt eine sehr scharfe und gleichmäßige Lackkante. Bei der Verwendung von höheren Lack-Einbrenntemperaturen (> 140° C) werden leichte Beläge (Ghosting) auf der Lackoberfläche beobachten.

Beispiel 2:

Analog dem Beispiel 1 wird ein entsprechend hergestelltes Trägermaterial, in dem jedoch in einem schnelldrehenden Mischer ein Dryblend aus 80 Gewichtsteilen Solvin® 264 PC (Solvin), 20 Gewichtsteilen 250 SB (Solvin), 4 Gewichtsteilen Vinnolit® K 221 (vernetztes PVC-Mattierungsmittel von Vinnolit), 31 Gewichtsteilen Palatinol® 652 (BASF), 20 Gewichtsteilen Omya EHX1 (Omya), 4 Gewichtsteilen Baerostab® UBZ 639 (Baerlocher) und 1,5 Gewichtsteilen Paroloid K 120 (Rohm und Haas) hergestellt wird, mit Haftvermittlerschicht sowie Klebstoff beschichtet.

Das selbstklebende Abdeckklebeband lässt sich faltenfrei abwickeln und beim Gebrauch zum Maskieren von Automobilteilen auch schwieriger Geometrie einwandfrei applizieren. Durch das niedrigere Zugkraftplateau bei Dehnungen zwischen 10 und 150 % ist eine besonders gute Anschmiegsamkeit an gewölbte Oberflächen sowie Kurvenverklebbarkeit gewährleistet. Es zeichnet sich durch eine besonders leichte Handeinreißbarkeit aus, ohne das im gleichen Maße die mechanischen Eigenschaften negativ beeinflusst werden. Nach dem Gebrauch (Lackierprozess) lässt sich das Abdeckklebeband problemlos und ohne Abrisse rückstandsfrei vom Verklebungsuntergrund abziehen und ergibt eine sehr scharfe und gleichmäßige Lackkante. Auch bei der Verwendung von höheren Lack-Einbrenntemperaturen von 150 bis 160° C werden keinerlei Beläge (Ghosting) auf der Lackoberfläche beobachten.

Beispiel 3:

Analog dem Beispiel 1 wird ein entsprechend hergestelltes Trägermaterial, in das allerdings zur Herstellung des Trägerfilmes zunächst in einem schnelldrehenden Mischer ein Dryblend aus 80 Gewichtsteilen Solvin® 264 PC (Solvin), 20 Gewichtsteilen Solvin® 250 SB (Solvin), 3 Gewichtsteilen Soken MX-180 TA (Soken), 27 Gewichtsteilen Palatinol® 652 (BASF), 20 Gewichtsteilen Omya EHX1 (Omya), 4 Gewichtsteilen Baerostab® UBZ 639 (Baerlocher) und 1,5 Gewichtsteile Paroloid K 120 (Rohm und Haas) hergestellt wird, mit Haftvermittlerschicht sowie Klebstoff beschichtet.

Das selbstklebende Adeckklebeband zeichnet sich durch eine besonders gute Anschmiegsamkeit an gewölbten Oberflächen sowie Kurvenverklebbarkeit aus. Ein leichtes Seiteneinreißen von Hand ist möglich, was sich in einer niedrigen Schlagzugzähigkeit widerspiegelt.

Beispiel 4:

Analog dem Beispiel 1 wird ein entsprechend hergestelltes Trägermaterial, in der allerdings zur Herstellung des Trägerfilmes zunächst in einem schnelldrehenden Mischer ein Dryblend aus 80 Gewichtsteilen Solvin® 264 PC (Solvin), 20 Gewichtsteilen Solvin® 250 SB (Solvin), 3 Gewichtsteilen Coathylene PB 0580 (Herberts Polymer Powders AG), 33 Gewichtsteilen Palatinol® 652 (BASF), 20 Gewichtsteilen Omya EHX1 (Omya), 4 Gewichtsteile Baerostab® UBZ 639 (Baerlocher) und 1,5 Gewichtsteilen Paroloid K 120 (Rohm und Haas) hergestellt und mit Haftvermittlerschicht sowie Klebstoff beschichtet.

Das selbstklebende Abdeckklebeband zeigt eine besonders Dehnbarkeit und Kurvenverklebbarkeit bei gleichzeitige hoher Festigkeit bei kleinen Dehnungen. Ein sehr leichtes Einreißen des Abdeckklebebandes von Hand ist möglich. Das spiegelt sich in einem sehr niedrigen Wert für die Schlagzugzähigkeit sowie Reißdehnung wieder.

Vergleich der Eigenschaften der Beispiele:

|  | Beispiel 1 | Beispiel 2 | Beispiel 3 | Beispiel 4 |
|---|---|---|---|---|
| Dicke [mm] | 0,08 | 0,95 | 0,08 | 0,09 |
| Reißkraft md* [N/cm] | 28 | 18 | 22 | 24 |
| Reißdehnung md* [%] | 284 | 218 | 243 | 155 |
| Kraft bei 1% md* [N/cm] | 4,7 | 5,9 | 6,1 | 5,8 |
| Temperaturbeständigkeit bei 150°C | + | ++ | ++ | ++ |
| Klebkraft Stahl [N/cm] | 2,3 | 2,8 | 3,5 | 3,8 |
| Handeinreißbarkeit | + | ++ | ++ | ++ |
| Schlagzugzähigkeit md/cd* [kJ/m$^2$] | 948/858 | 356/263 | 426/351 | 163/146 |
| * md Maschinenrichtung; cd quer zur Maschinenrichtung | | | | |

Vergleichsbeispiel 1:

Analog Beispiel 1 wird ein Trägermaterial bestehend aus 100 Gewichtsteilen Vinnolit® H 65 D (Vinnolit), 40 Gewichtsteilen Palamoll® AH (BASF), 10 Gewichtsteilen Omya EHX1 (Omya), 4 Gewichtsteilen Baerostab® UBZ 639 (Baerlocher) und 3-Gewichtsteile Baerostab® LSA (Baerlocher) hergestellt und mit Haftvermittlerschicht sowie Klebstoff beschichtet.

Das Abdeckklebeband wird beim Gebrauch erheblich verstreckt, so dass eine erhebliche Schrumpfneigung bei erhöhten Temperaturen beobachtet wird. Ein Abreißen von Hand ist nur mit sehr hohem Kraftaufwand möglich. Des weiteren lässt es sich nach dem Gebrauch (Lackierprozess) nicht rückstandsfrei vom Verklebungsuntergrund abziehen. Es wird vollflächiges Umspulen der Klebstoff beobachtet.

Vergleichsbeispiel 2:

Analog Beispiel 1 wird ein Trägermaterial bestehend aus 100 Gewichtsteilen Solvin® 265 PC (Solvin), 38 Gewichtsteilen Palamoll® 652 (BASF), 20 Gewichtsteilen Omya EHX1 (Omya), 4 Gewichtsteilen Mark® 17 M (Akcros Chem.), 2 Gewichtsteilen Baerostab® LSA (Baerlocher) und 1,5 Gewichtsteilen Paroloid® K 120 (Rohm und Haas) hergestellt und mit Haftvermittlerschicht sowie Klebstoff beschichtet.

Das selbstklebende Abdeckklebeband dehnt sich beim Gebrauch übermäßig, so dass bei der Temperaturlagerung Rückschrumpfen und Masserückstände an den Enden beobachtet werden. Das Abreißen des Klebebandes von Hand ist nur mit einem sehr großen Kraftaufwand möglich.

Vergleichsbeispiel 3:

Analog Beispiel 1 wird ein Trägermaterial bestehend aus 100 Gewichtsteilen Solvin® 258 RF (Solvin), 30 Gewichtsteilen Palatinol® 652 (BASF), 1,5 Gewichtsteilen Palatinol® N (BASF), 20 Gewichtsteilen Omya EHX1 (Omya), 4 Gewichtsteilen Baerostab® UBZ 639 (Baerlocher), 2 Gewichtsteilen Baerostab® LSA (Baerlocher) und 1,5 Gewichtsteilen Paroloid K 120 (Rohm und Haas) hergestellt und mit Haftvermittlerschicht sowie Klebstoff beschichtet.

Dieses Abdeckklebeband lässt sich bei Gebrauch einwandfrei applizieren und zeigt eine gute Kurvenverklebbarkeit. Die Verarbeitung ist jedoch erschwert, da das Abreißen von Hand nur mit einem erhöhten Kraftaufwand möglich ist. Das zeigt sich in erhöhten Werten der Schlagzugzähigkeit sowie der Reißdehnung.

Vergleich der Eigenschaften der Vergleichsbeispiele:

|  | Vergleichbsp. 1 | Vergleichbsp. 2 | Vergleichbsp. 3 |
|---|---|---|---|
| Dicke [mm] | 0,1 | 0,08 | 0,09 |

Tabelle fortgesetzt

|  | Vergleichbsp. 1 | Vergleichbsp. 2 | Vergleichbsp. 3 |
|---|---|---|---|
| Reißkraft [N/cm] | 36 | 34 | 27 |
| Reißdehnung [%] | 335 | 324 | 314 |
| Kraft bei 1 % [Nlcm] | 1,3 | 1,9 | 4,3 |
| Temperaturbeständigkeit bei 150° C | - Umspulen | + | + |
| Klebkraft Stahl [N/cm] | 1,1 | 2,8 | 2,9 |
| Handeinreißbarkeit | - |  |  |
| Schlagzugzähigkeit md/cd* [kJ/m$^2$] | 2265/1930 | 20647/1936 | 1426/1395 |
| * md Maschinenrichtung; cd quer zur Maschinenrichtung | | | |

In den Beispielen und Vergleichsbeispielen verwendete Rohstoffe:

| Rohstoff | Hersteller | Beschreibung und Verwendung |
|---|---|---|
| Solvin 265 PC | Solvin | Suspensions-PVC, K-Wert 65 |
| Solvin 264 PC | Solvin | Suspensions-PVC, K-Wert 64 |
| Solvin 250 SB | Solvin | Suspensions-PVC, K-Wert 50 |
| Solvin 258 RF | Solvin | Suspensions-PVC, K-Wert 58 |
| Vinnolit H 65 D | Vinnolit | Suspensions-PVC, K-Wert 65 |
| Vinnolit K 221 | Vinnolit | vernetztes PVC, Mattierungsmittel |
| Palamoll AH | BASF | Monomerer Phthalat-Weichmacher (DOP) |
| Palatinol N | BASF | Monomerer Phthalat-Weichmacher (DINP) |
| Palatinol 652 | BASF | Polymerer Weichmacher, Polyadipat |
| Omya EHX1 | Omya | Kreide, Füllstoff |
| Mark 17 M | Akcros Chem. | PVC-Stabilisator auf Basis von Zinn-Verbindungen |
| Baerostab UBZ 639 | Baerlocher | PVC-Stabilisator auf Basis von Ba/Zn-Verbindungen |
| Baerostab LSA | Baerlocher | Epoxidiertes Sojabohnenöl, Co-Stabilisator |
| Paroloid K 120 | Rohm und Haas | Verarbeitungshilfsmittel auf Polyacrylat-Basis |
| Styroflex 6105 | BASF | Polystyrol, mit PVC unverträgliches Polymer |
| Soken MX-180 TA | Soken | Vemetztes Polyacrylat |
| Coathylene PB 0580 | Herberts Polymer Powders AG | Polypropylen, mit PVC unverträgliches Polymer |

**Patentansprüche**

1. Folie aus wenigstens einem PVC-Polymer und wenigstens einem Weichmacher, wobei sie 2 bis 25 Gewichtsteile eines additiven Polymers, in Form eines in sich vernetzten oder eines mit PVC unverträglichen Polymers, auf 100 Gewichtsteile des PVC-Polymers und 25 bis 37 Gewichtsteile eines Polymerweichmachers auf 100 Gewichtsteile des PVC-Polymers - ohne das additive Polymer - enthält, und wobei die Zugkraft längs bei 1 % Dehnung auf einen Wert von mindestens 3.0 N/cm eingestellt ist

2. Folie nach Anspruch 1, **dadurch gekennzeichnet, dass** sie 2 bis 10 Gewichtsteile des additiven Polymers auf 100 Gewichtsteile PVC-Polymer enthält.

**EP 1 362 881 B1**

3. Folie nach Anspruch 1 oder 2, **dadurch gekennzeichnet, dass** das vernetzte Polymer ein PVC, ein Polyacrylat, ein Benzoguanamin/Malamin-Formaldehyd-Harz, ein Polystyrol oder ein Silikon ist.

4. Folie nach einem der Ansprüche 1 bis 3, **dadurch gekennzeichnet, dass** das mit PVC unverträgliche Polymer ein Homo- oder Copolymer eines Ethylens, eines Propylens, eines Styrols oder eines Amids ist.

5. Folie nach einem der Ansprüche 1 bis 4, **dadurch gekennzeichnet, dass** sie 30 bis 33 Gewichtsteile des Polymerweichmachers auf 100 Gewichtsteile PVC-Polymer enthält.

6. Folie nach einem der Ansprüche 1 bis 5, **dadurch gekennzeichnet, dass** der Polymerweichmacher ein Polyester auf Basis einer Adipin-, Sebacin-, Azelain-, Phthalsäure und/oder auf Basis von Polyadipatestem ist.

7. Folie nach einem der Ansprüche 1 bis 6, **dadurch gekennzeichnet, dass** die Schlagzugzähigkeit längs zur Maschinenrichtung auf kleiner 1000 kJ/m$^2$ eingestellt ist.

8. Folie nach Anspruch 7, **dadurch gekennzeichnet, dass** die Schlagzugzähigkeit längs zur Maschinenrichtung auf kleiner 700 kJ/m$^2$ eingestellt ist.

9. Folie nach einem der Ansprüche 1 bis 8, **dadurch gekennzeichnet, dass** die Reißdehnung längs im Bereich von 150 bis 300 % eingestellt ist.

10. Folie nach Anspruch 9, **dadurch gekennzeichnet, dass** die Reißdehnung längs im Bereich von 180 bis 250 % eingestellt ist.

11. Folie nach Anspruch 1, **dadurch gekennzeichnet, dass** die Zugkraft längs bei 1 % Dehnung auf einen Wert von mindestens 5,5 N/cm eingestellt ist.

12. Folie nach einem der Ansprüche 1 bis 11, **dadurch gekennzeichnet, dass** die Reißkraft von 12 bis 30 N/cm eingestellt ist.

13. Folie nach Anspruch 1, **dadurch gekennzeichnet, dass** das PVC-Polymer maximal einen K-Wert von 63 hat.

14. Folie nach einem der Ansprüche 1 bis 13, **dadurch gekennzeichnet, dass** sie wenigstens ein Additiv enthält.

15. Folie nach Anspruch 14, **dadurch gekennzeichnet, dass** das Additiv ein Stabilisator, ein Füllstoff, ein PVC-verträgliches Polymer, ein Pigment, ein Impactmodifier, ein Gleitmittel und/oder ein Verarbeitungshilfsmittel ist

16. Klebeband, gebildet mit einer Folie nach einem der Ansprüche 1 bis 15 als Trägermaterial und mit einem auf die Folie aufgebrachten Klebstoff.

17. Klebeband nach Anspruch 16, **dadurch gekennzeichnet, dass** der Klebstoff einseitig auf die Folie aufgebracht ist

18. Klebeband nach Anspruch 16 oder 17, **dadurch gekennzeichnet, dass** der Klebstoff vemetzt und auf eine Klebkraft im Bereich von 2,0 bis 4,8 N/cm eingestellt ist.

19. Klebeband nach einem der Ansprüche 16 bis 18, **dadurch gekennzeichnet, dass** sich zwischen der Folie und dem Klebstoff eine Primerschicht befindet

**Claims**

1. Film comprising at least one PVC polymer and at least one plasticizer, further comprising from 2 to 25 parts by weight of an additive polymer in the form of an inherently crosslinked or PVC-incompatible polymer per 100 parts by weight of the PVC polymer and from 25 to 37 parts by weight of a polymer plasticizer per 100 parts by weight of the PVC polymer, excluding the additive polymer, the longitudinal tensile force at 1% elongation being set to a level of at least 3.0 N/cm.

2. Film according to Claim 1, **characterized in that** it contains from 2 to 10 parts by weight of the additive polymer

9

per 100 parts by weight of PVC polymer.

3. Film according to Claim 1 or 2, **characterized in that** the crosslinked polymer is a PVC, polyacrylate, benzoguanamine/melamine-formaldehyde resin, polystyrene or silicone.

4. Film according to any of Claims 1 to 3, **characterized in that** the PVC-incompatible polymer is a homopolymer or copolymer of an ethylene, of a propylene, of a styrene or of an amide.

5. Film according to any of Claims 1 to 4, **characterized in that** it contains from 30 to 33 parts by weight of the polymer plasticizer per 100 parts by weight of PVC polymer.

6. Film according to any of Claims 1 to 5, **characterized in that** the polymer plasticizer is a polyester based on an adipic, sebacic, azelaic or phthalic acid and/or based on polyadipate esters.

7. Film according to any of Claims 1 to 6, **characterized in that** the tensile impact strength longitudinal to the machine direction is set at less than 1000 kJ/m$^2$.

8. Film according to Claim 7, **characterized in that** the tensile impact strength longitudinal to the machine direction is set at less than 700 kJ/m$^2$.

9. Film according to any of Claims 1 to 8, **characterized in that** the elongation at break longitudinally is set in the range from 150 to 300%.

10. Film according to Claim 9, **characterized in that** the elongation at break longitudinally is set in the range from 180 to 250%.

11. Film according to Claim 1, **characterized in that** the longitudinal tensile force at 1% elongation is set to a level of at least 5.5 N/cm.

12. Film according to any of Claims 1 to 11, **characterized in that** the tensile strength is set at from 12 to 30 N/cm.

13. Film according to Claim 1, **characterized in that** the PVC polymer has a K value of not more than 63.

14. Film according to any of Claims 1 to 13, **characterized in that** it comprises at least one additive.

15. Film according to Claim 14, **characterized in that** the additive is a stabilizer, filler, PVC-compatible polymer, pigment, impact modifier, lubricant and/or processing assistant.

16. Adhesive tape formed with a film according to any of Claims 1 to 15 as backing material and with an adhesive applied to the film.

17. Adhesive tape according to Claim 16, **characterized in that** the adhesive is applied to one side of the film.

18. Adhesive tape according to Claim 16 or 17, **characterized in that** the adhesive is crosslinked and is set at a bond strength in the range from 2.0 to 4.8 N/cm.

19. Adhesive tape according to any of Claims 16 to 18, **characterized in that** a primer layer is located between the film and the adhesive.

**Revendications**

1. Feuille constituée d'au moins un polymère de PVC et d'au moins un plastifiant, qui contient de 2 à 25 parties en poids d'un polymère additif, sous la forme d'un polymère réticulé en soi ou incompatible avec le PVC, pour 100 parties en poids du polymère de PVC et de 25 à 37 parties en poids d'un plastifiant polymère pour 100 parties en poids du polymère de PVC - sans le polymère additif -, et où la force de traction longitudinale pour 1% d'allongement est ajustée à une valeur d'au moins 3,0 N/cm.

**2.** Feuille selon la revendication 1, **caractérisée en ce qu'**elle contient de 2 à 10 parties en poids du polymère additif pour 100 parties en poids de polymère de PVC.

**3.** Feuille selon la revendication 1 ou 2, **caractérisée en ce que** le polymère réticulé est un PVC, un polyacrylate, une résine de benzoguanamine / mélamine - formaldéhyde, un polystyrène ou un silicone.

**4.** Feuille selon l'une quelconque des revendications 1 à 3, **caractérisée en ce que** le polymère incompatible avec le PVC est un homo- ou un copolymère d'éthylène, de propylène, de styrène ou d'un amide.

**5.** Feuille selon l'une quelconque des revendications 1 à 4, **caractérisée en ce qu'**elle contient de 30 à 33 parties en poids du plastifiant polymère pour 100 parties en poids du polymère de PVC.

**6.** Feuille selon l'une quelconque des revendications 1 à 5, **caractérisée en ce que** le plastifiant polymère est un polyester à base d'un acide adipique, sébacique, azélaïque, phtalique et / ou à base de poly(esters adipates).

**7.** Feuille selon l'une quelconque des revendications 1 à 6, **caractérisée en ce que** la ténacité en traction-choc longitudinalement au sens machine est ajustée à moins de 1000 kJ/m$^2$.

**8.** Feuille selon la revendication 7, **caractérisée en ce** la ténacité en traction-choc longitudinalement au sens machine est ajustée à moins de 700 kJ/m$^2$.

**9.** Feuille selon l'une quelconque des revendications 1 à 8, **caractérisée en ce que** l'allongement à la rupture en longueur est ajusté dans la plage de 150 à 300%.

**10.** Feuille selon la revendication 9, **caractérisée en ce que** l'allongement à la rupture en longueur est ajusté dans la plage de 180 à 250%.

**11.** Feuille selon la revendication 1, **caractérisée en ce que** la force de traction en longueur pour un allongement de 1% est ajustée à une valeur d'au moins 5,5 N/cm.

**12.** Feuille selon l'une quelconque des revendications 1 à 11, **caractérisée en ce que** la force de déchirement est ajustée entre 12 et 30 N/cm.

**13.** Feuille selon la revendication 1, **caractérisée en ce que** le polymère de PVC possède une valeur K maximale de 63.

**14.** Feuille selon l'une quelconque des revendications 1 à 13, **caractérisée en ce qu'**elle contient au moins un additif.

**15.** Feuille selon la revendication 14, **caractérisée en ce que** l'additif est un stabilisant, une charge, un polymère compatible avec le PVC, un pigment, un modificateur de la résistance au choc, un lubrifiant et / ou un adjuvant de transformation.

**16.** Ruban adhésif formé d'une feuille selon l'une quelconque des revendications 1 à 15 en tant que matériau de support et d'un adhésif appliqué sur la feuille.

**17.** Ruban adhésif selon la revendication 16, **caractérisé en ce que** l'adhésif est appliqué sur une face de la feuille.

**18.** Ruban adhésif selon la revendication 16 ou 17, **caractérisé en ce que** l'adhésif est réticulé et ajusté à une force d'adhérence de l'ordre de 2,0 à 4,8 N/cm.

**19.** Ruban adhésif selon l'une quelconque des revendications 16 à 18, **caractérisé en ce qu'**il se trouve une couche d'apprêt entre la feuille et l'adhésif.